# EUROPEAN PATENT SPECIFICATION

(11) **EP 4 340 351 B1**
(45) Date of publication and mention of the grant of the patent: **03.06.2026**
(21) Application number: 22806678.3
(22) Date of filing: 09.05.2022
(51) Int. Cl.: H04N 23/55, H04N 23/57, H04N 23/68, G03B 3/10, G03B 13/34, G03B 30/00, G02B 27/64, H02K 41/035

(54) **CAMERA MODULE AND ELECTRONIC DEVICE**
KAMERAMODUL UND ELEKTRONISCHE VORRICHTUNG
MODULE DE CAMÉRA ET DISPOSITIF ÉLECTRONIQUE

(30) Priority: 14.05.2021 CN 202110528437
(43) Date of publication of application: 20.03.2024
(73) Proprietor: Vivo Mobile Communication Co., Ltd., Dongguan, Guangdong 523863 (CN)
(72) Inventor: BAI, Yang, Dongguan, Guangdong 523863 (CN); HU, Shijing, Dongguan, Guangdong 523863 (CN)
(74) Representative: Lavoix
(86) International application number: PCT/CN2022/091625
(87) International publication number: WO 2022/237713

(56) References cited:
- EP-A1- 4 124 011
- CN-A- 110 266 949
- CN-A- 111 130 304
- CN-A- 111 510 598
- CN-A- 111 510 598
- CN-A- 111 917 965
- CN-A- 112 272 269
- CN-A- 113 259 563
- CN-U- 210 781 015
- CN-U- 210 781 015
- US-A1- 2012 099 201
- US-A1- 2018 188 527

## Description

### TECHNICAL FIELD

This application belongs to the field of photographing device technologies, and specifically, to a camera module and an electronic device.

### BACKGROUND

With the advancement of technologies, an electronic device (such as a mobile phone, and a tablet computer) has been greatly developed. As a powerful tool, the electronic device greatly facilitates life and work of users. A camera function is a basic function of the electronic device, which can satisfy photographing requirements of the users. The camera function is usually implemented by a camera module of the electronic device.

During implementation of the present invention, the inventor finds that the following problems in the related art. The users usually hold the electronic device to photograph images. Due to shaking during handheld photographing, resulting in a poor image quality taken by the electronic device.

CN111510598A relates to a camera module and an electronic device.

CN210781015U relates to a camera module and an electronic device with the camera module.

### SUMMARY

An objective of embodiments of this application is to provide a camera module and an electronic device, which can resolve the problem of poor photographing quality of the electronic device.

To resolve the foregoing technical problem, this application is implemented as follows:
An embodiment of this application provides a camera module, including:
a module housing, where the module housing is provided with a first inner cavity;
a camera, where the camera includes a lens assembly and a main body portion, the main body portion is located in the first inner cavity, the main body portion is provided with a second inner cavity, at least part of the lens assembly is located in the second inner cavity, the lens assembly is capable of rotating around an optical axis of the lens assembly in the second inner cavity, and the bottom of the module housing and the bottom of the main body portion are elastically connected by an elastic member; and
a driving mechanism, where the driving mechanism includes a first coil group, a second coil group, a third coil group, and a fourth coil group; one of the first coil group and the second coil group is arranged on the lens assembly, and the other is arranged on the main body portion; and the third coil group and the fourth coil group are spaced apart on the module housing, where
the first coil group includes at least one pair of first coils, the at least one pair of first coils are spaced apart in a circumferential direction of the lens assembly, the one pair of first coils are arranged opposite to each other, the second coil group includes at least one second coil, the at least one second coil is located between the one pair of first coils, the third coil group is arranged opposite to the second coil group, and the fourth coil group is arranged opposite to the first coil group;
in a case that the first coil group and the second coil group are energized, the lens assembly is driven to rotate around the optical axis;
in a case that the third coil group and the second coil group are energized, the main body portion is driven to move along a first plane, where the first plane is perpendicular to the optical axis; and
in a case that the first coil group and the fourth coil group are energized, the main body portion is driven to rotate around at least one axis in the first plane.

An embodiment of this application provides an electronic device, including the foregoing camera module.

In the embodiments of this application, the driving mechanism includes a first coil group, a second coil group, a third coil group, and a fourth coil group. In a case that the first coil group, the second coil group, the third coil group, and the fourth coil group are energized, a magnetic field can be generated, so that the movement of the lens assembly can be driven through cooperation between different coil groups. In this solution, the matched coil groups can drive the lens assembly to move in an opposite direction of shaking of the camera module, so that a quantity of shake of the camera module can be performed compensation, and then an anti-shake function of the camera module can be implemented to improve the photographing quality of the electronic device.

### BRIEF DESCRIPTION OF THE DRAWINGS

FIG. 1 and FIG. 2 are exploded views of a camera module according to an embodiment of this application;
FIG. 3 is a top view of a camera module according to an embodiment of this application;
FIG. 4 and FIG. 5 are schematic structural diagrams of a lens assembly of a camera module according to an embodiment of this application;
FIG. 6 is a schematic structural diagram of a carrier ring in a camera module according to an embodiment of this application;
FIG. 7 is a top view of a module housing in a camera module according to an embodiment of this application;
FIG. 8 is a top view of a bottom plate of a module housing in a camera module according to an embodiment of this application;
FIG. 9 is a cross-sectional view of a bottom plate of a module housing and an elastic member in a camera module according to an embodiment of this application; and
FIG. 10 is a partial enlarged view of FIG. 9.

### List of Reference Numerals:

100-Module housing, 110-Cover body, 111-Avoidance hole, 120-Bottom plate, 121-Positioning protrusion, 200-Camera, 210-Lens assembly, 220-Main body portion, 230-Carrier ring, 300-Elastic member, 310-Elastic pad, 311-Positioning hole, 320-Spring, 410-First coil group, 420-Second coil group, 430-Third coil group, 440-Fourth coil group.

### DETAILED DESCRIPTION

The following clearly and completely describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application without creative efforts shall fall within the protection scope of this application.

The specification and claims of this application, and terms "first" and "second" are used to distinguish similar objects, but are unnecessarily used to describe a specific sequence or order. It should be understood that the terms in such a way are interchangeable in proper circumstances, so that the embodiments of this application can be implemented in other orders than the order illustrated or described herein. In addition, in the specification and the claims, "and/or" means at least one of the connected objects, and the character "/" generally indicates an "or" relationship between the associated objects.

A camera module provided in the embodiments of this application are described below through specific embodiments and application scenarios thereof with reference to the accompanying drawings.

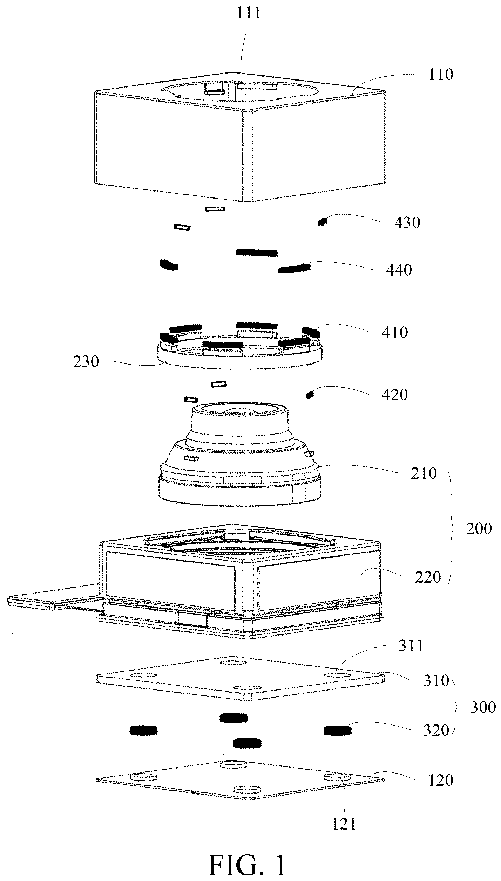

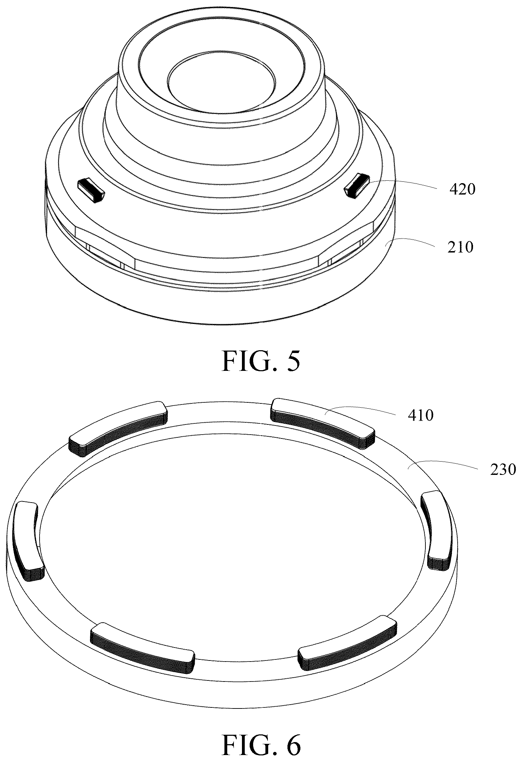

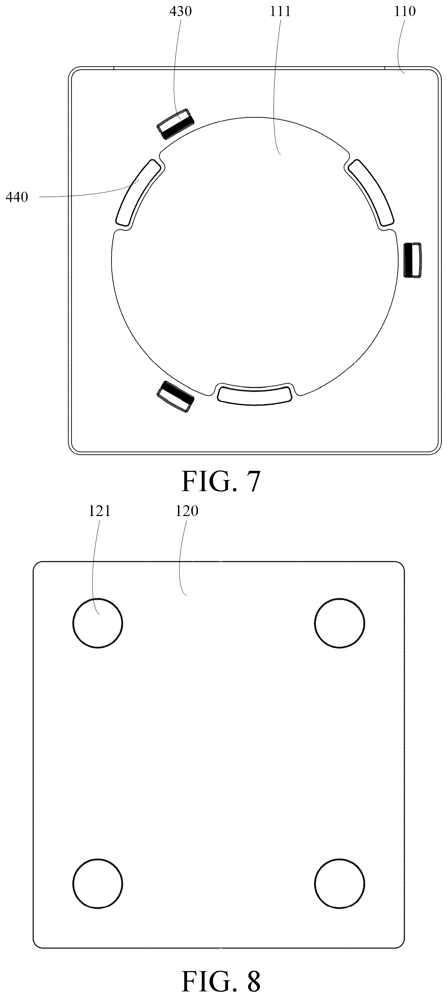

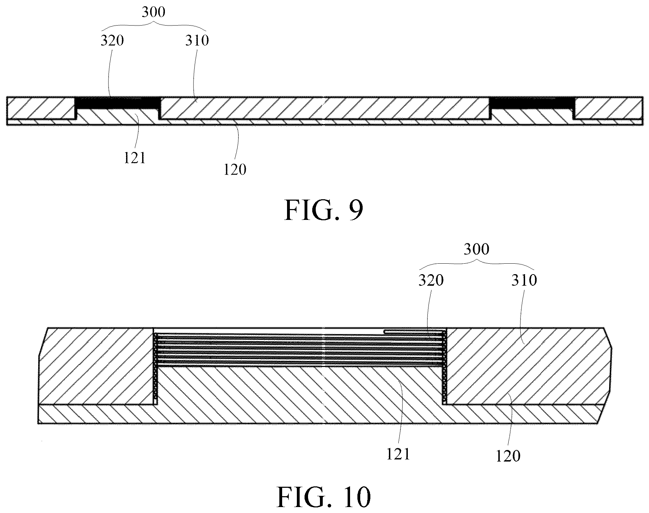

Refer to FIG. 1 to FIG. 10, an embodiment of this application discloses a camera module, and the disclosed camera module is applied to an electronic device. The disclosed camera module includes a module housing 100, a camera 200, and a driving mechanism.

The module housing 100 provides a mounting base for the camera 200, the driving mechanism, and other components of the camera module. The module housing 100 is provided with a first inner cavity, and at least part of the camera 200 may be arranged in the first inner cavity.

The camera 200 is a functional device of the camera module, and is configured to implement a photographing function of the camera module. The camera 200 includes a lens assembly 210 and a main body portion 220. The lens assembly 210 is configured to collect external environment light, the main body portion 220 provides the mounting base for the lens assembly 210, and the main body portion 220 is also a functional component of the camera 200. For example, the main body portion 220 may include components such as a mounting housing, a photosensitive chip, a circuit board, and a filter.

The main body portion 220 is located in the first inner cavity, and the main body portion 220 is provided with a second inner cavity, and at least part of the lens assembly 210 is located in the second inner cavity. The lens assembly 210 can rotate around an optical axis of the lens assembly 210 in the second inner cavity. A bottom of the module housing 100 and a bottom of the main body portion 220 are elastically connected by an elastic member 300. In this case, the main body portion 220 can move in the first inner cavity, so as to drive the lens assembly 210 to move in the first inner cavity together.

Optionally, the elastic member may be an elastic structure such as elastic foam, a spring, or an elastic suspension wire, and certainly may also be another elastic structure, which is not limited herein.

The driving mechanism includes a first coil group 410, a second coil group 420, a third coil group 430, and a fourth coil group 440; in the first coil group 410 and the second coil group 420, one is arranged on the lens assembly 210, and the other is arranged on the main body portion 220; and the third coil group 430 and the fourth coil group 440 are spaced apart on the module housing 100.

The first coil group 410 includes at least one pair of first coils, and the at least one pair of first coils are spaced apart in a circumferential direction of the lens assembly 210. The second coil group 420 includes at least one second coil, and the at least one second coil is located between a pair of first coils. In this case, one second coil is located between a pair of first coils. A pair of opposite first coils form a rotating magnetic field when energized, the second coil is an energized coil, and the energized second coil is located in a pair of energized first coils. In this case, it is equivalent to putting the energized second coil into the rotating magnetic field. The energized second coil can generate a rotational movement of cutting a magnetic induction line in the magnetic field, so that an ampere force is generated between the first coil group 410 and the second coil group 420, thereby driving the second coil group 420 to rotate. In a case that the first coil group 410 and the second coil group 420 are energized, the first coil group 410 generates a rotating magnetic field, so that the first coil group 410 may be a stator, the second coil group 420 rotates in the rotating magnetic field, the second coil group 420 may be a rotor, thereby driving the lens assembly 210 to rotate around the optical axis. Certainly, according to the interaction of forces, the second coil group 420 may be used as a stator, and the first coil group 410 may be used as a rotor. Certainly, in the first coil group 410 and the second coil group 420, one arranged on the lens assembly 210 is a rotor, and one arranged on the main body portion 220 is a stator.

In the foregoing embodiment, the main body portion 220 and the lens assembly 210 only have rotational degrees of freedom in a direction of the optical axis, and the movement of the main body portion 220 and the lens assembly 210 in another direction may regard the main body portion 220 and the lens assembly 210 as a whole.

The third coil group 430 is arranged opposite to the second coil group 420. When the third coil group 430 and the second coil group 420 are energized, a magnetic field is generated. In this case, the second coil group 420 and the third coil group 430 are equivalent to two electromagnets, the magnetic field generated between the third coil group 430 and the second coil group 420 interact to drive the second coil group 420 to move. Therefore, in a case that the third coil group 430 and the second coil group 420 are energized, the main body portion 220 is driven to move along a first plane, and the first plane is perpendicular to the optical axis.

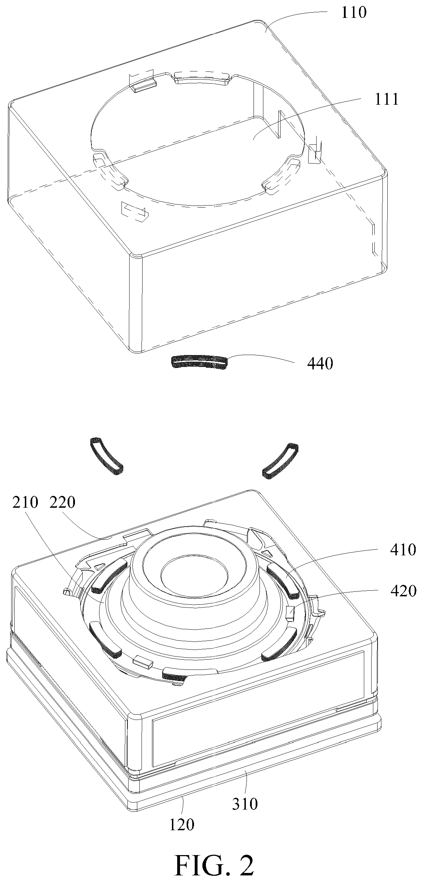

The fourth coil group 440 is arranged opposite to the first coil group 410. When the fourth coil group 440 and the first coil group 410 are energized, a magnetic field is generated. In this case, the fourth coil group 440 and the first coil group 410 are equivalent to two electromagnets, the magnetic field generated between the fourth coil group 440 and the first coil group 410 interact to drive the first coil group 410 to move. Therefore, in a case that the first coil group 410 and the fourth coil group 440 are energized, the main body portion 220 is driven to rotate around at least one axis in the first plane. In this case, as shown in FIG. 2, a direction of an electromagnetic force generated by the fourth coil group 440 on the first coil group 410 is parallel to the direction of the optical axis, and the electromagnetic force generated by the fourth coil group 440 on the first coil group 410 acts on the main body portion 220 or a side of the lens assembly 210, so that the main body portion 220 or the lens assembly 210 tilts to the side on which the electromagnetic force acts, and an axis of rotation is a central axis between the side on which the electromagnetic force acts and an opposite side of the electromagnetic force. Optionally, the fourth coil group 440 includes at least one fourth coil, and each fourth coil is arranged opposite to one first coil. Certainly, the fourth coil group 440 and the first coil group 410 have another matching manner, which may be flexibly set according to an actual situation, as long as the rotation of the camera 200 is satisfied.

In the embodiments disclosed in the present application, the first coil group 410, the second coil group 420, the third coil group 430, and the fourth coil group 440 can generate the magnetic field when energized, so that the lens assembly 210 can be driven to move through the cooperation between different coil groups. In this solution, the matched coil groups can drive the lens assembly 210 to move in an opposite direction of shaking of the camera module, so that a quantity of shake of the camera module can be performed compensation, and then an anti-shake function of the camera module can be implemented to improve the photographing quality of the electronic device.

In addition, when a direction of a current passing through the coil group is changed, a direction of the ampere force is changed, so that the lens assembly 210 can change direction flexibly, and an anti-shake effect is better.

In addition, through the cooperation between different coil groups, ampere forces in a plurality of directions can be generated, so that the lens assembly 210 is driven to move in the plurality of directions, thereby improving a range of movement of the lens assembly 210 and further improving anti-shake performance of the camera module.

In another optional embodiment, the first coil group 410 may include a plurality of first coils, and a quantity of the first coils is an even number. In this case, the first coil group 410 can be in pairs, and spacing angles between the two adjacent first coils are the same. The second coil group 420 may include a plurality of second coils, and at least one second coil is correspondingly arranged between each pair of first coils. In this solution, a pair of opposite first coils form a phase, and in this solution, the first coil group 410 forms a plurality of phases, which can increase magnetic flux of the magnetic field, thereby increasing a driving force applied to the lens assembly 210, improving rotation efficiency of the lens assembly 210, and further improving the anti-shake effect of the lens assembly 210. In addition, a tangential direction of the lens assembly 210 can generate a plurality of tangential forces, thereby making the rotation of the lens assembly 210 in the direction of the optical axis more stable.

Further, the first coil group 410 includes three pairs of first coils, a quantity of the second coils is three, an angle between two adjacent second coils is 120°, and the three second coils are arranged in a one-to-one correspondence with the three pairs of first coils. In this case, the first coils in the first coil group 410 are divided into three pairs, each pair of first coils form a phase, and a phase angle of the first coil group 410 is 120°. Each phase corresponds to one second coil. In this case, each phase of the first coil group 410 can provide a stable magnetic field for the second coil group 420, which further improves stability of the lens assembly 210 rotating along the optical axis. In addition, the first coil group 410 is evenly distributed in a 360° circular direction, so that the force on the lens assembly 210 is more balanced, and it is not easy to tilt to a side, which improves reliability of the camera module.

In another optional embodiment, the third coil group 430 includes three third coils, each third coil is arranged opposite to the one second coil, and an angle between any two adjacent third coils is 120°. In this solution, the three third coils are distributed in a circumferential direction of the main body portion 220, and an angle between any two adjacent second coils is 120°. The three third coils and the three second coils form electromagnetic forces in three directions in the first plane, and the movement in a plurality of directions in the first plane can be implemented by changing magnitudes of the electromagnetic forces in the three directions, thereby increasing a range of movement of the main body portion 220 in the first plane, and further improving anti-shake performance of the camera module.

In addition, the third coil group 430 is evenly distributed in the circumferential direction of the lens assembly 210, so that the forces on the lens assembly 210 in all directions are relatively balanced, and the anti-shake effect is better.

For example, the movement of a plane formed by an X-axis and a Y-axis can be implemented by changing the magnitudes of the electromagnetic forces in the three directions.

In another optional embodiment, the fourth coil group 440 includes three fourth coils, the three fourth coils are arranged opposite to the one first coil in each pair of first coils, and an angle between any two adjacent fourth coils is 120°. In this solution, a direction of the electromagnetic force between the fourth coil and the first coil is parallel to the optical axis. In this case, when one or more fourth coils and the first coil are energized, the camera 200 rotates. In this solution, the rotation in the plurality of directions is implemented by controlling energization of the fourth coil and the first coil at different positions, thereby improving anti-shake performance of the camera module.

In the foregoing embodiment, the fourth coils in the fourth coil group 440 are evenly distributed in the circumferential direction of the lens assembly 210, so that the forces on the lens assembly 210 in all directions are relatively balanced, and the anti-shake effect is better.

For example, the rotations in an X-axis direction and a Y-axis direction can be implemented by controlling energization of the fourth coil and the third coil at different positions.

In another optional embodiment, in a case that all the fourth coils in the fourth coil group 440 and the first coils corresponding to all the third coils are energized, the main body portion 220 is driven to move in a direction of the optical axis. This solution can implement a focusing function of the camera module, which further improves photographing performance of the camera module.

In the embodiments of this application, a structure of the module housing 100 may be various. Refer to FIG. 1, in a specific embodiment, the module housing may include a cover body 110 and a bottom plate 120, the cover body 110 and the bottom plate 120 enclose the first inner cavity, the cover body 110 is provided with an avoidance hole 111, and the lens assembly 210 is arranged opposite to the avoidance hole 111. The avoidance hole is in communication with the first inner cavity. The avoidance hole 111 is configured to expose a lens in the lens assembly 210. The module housing 100 with the foregoing structure has good assembly performance and is convenient for mounting the lens assembly 210.

Optionally, the cover body 110 and the bottom plate 120 may also be connected in a manner such as clamping, bonding, or welding, and a specific connection manner of the cover body 110 and the bottom plate 120 is not limited herein.

In the foregoing embodiment, the main body portion 220 is easily to collide rigidly with the bottom plate 120 during rotation, thereby easily causing damage to the main body portion 220. In another optional embodiment, the elastic member 300 may include an elastic pad 310 and a plurality of springs 320, the elastic pad 310 may be arranged on a surface of one side of the bottom plate 120 facing the main body portion 220, and the plurality of springs 320 may be spaced apart in a circumferential direction of the main body portion 220. Optionally, the springs 320 may be distributed at four corners of the main body portion 220. The elastic pad 310 may be provided with positioning holes 311, and the spring 320 may be located in the positioning hole 311. In this solution, the elastic pad 310 can prevent rigid contact between the main body portion 220 and the bottom plate 120, so that a rigid collision between the main body portion 220 and the bottom plate 120 can be effectively prevented, and the main body portion 220 is not easily to be damaged, thereby improving security and reliability of the camera module.

In the foregoing embodiment, the elastic pad 310 may be an elastic structural member, such as foam, and certainly may also be made of another elastic structure, which is not limited herein.

In another optional embodiment, a positioning protrusion 121 is provided on the side of the bottom plate 120 facing the main body portion 220, both the positioning protrusion 121 and the spring 320 are located in the positioning hole 311, and an end of the positioning protrusion 121 away from the bottom plate 120 is connected to the spring 320. In this solution, the positioning protrusion 121 is located in the positioning hole 311, which can be used for positioning an installation position of the elastic member 300, and preventing the elastic member 300 from being displaced, so that a rotation center of the camera 200 is not easily to be offset, thereby further improving anti-shake performance of the camera module.

In another optional embodiment, the second coil group 420 and the third coil group 430 may be located in a second plane, the third coil group 430 may be arranged around outside the second coil group 420, and the second plane is parallel to the first plane. In this solution, the third coil group 430 may be arranged around outside the second coil group 420, so that the third coil group 430 may be arranged by using a gap between the module housing 100 and the main body portion 220, and the third coil group 430 is not easily to be interfered with the camera 200, thereby improving assembly reliability of the camera module.

Optionally, a first raised bearing portion may be provided on the top of the module housing 100 extending toward in a direction of the bottom of the module housing, and the third coil group 430 may be arranged on the first raised bearing portion. Certainly, the third coil group 430 may also be fixed on the module housing 100 in another manner, which is not limited herein.

In the foregoing embodiment, since the first coil group 410 and the fourth coil group 440 need to generate an electromagnetic force parallel to the optical axis, the fourth coil group 440 may be arranged on the bottom or the top of the module housing 100 because the bottom needs to be provided with components such as the elastic member 300 and there is no installation position. Therefore, in another optional embodiment, the first coil group 410 and the fourth coil group 440 may be distributed in a direction of the optical axis, and the fourth coil group 440 may be located between the first coil group 410 and the top of the module housing 100. In this solution, the fourth coil group 440 may be located between the first coil group 410 and the top of the module housing 100, thereby facilitating an assembly gap between the top of the lens assembly 210 and the top of the module housing 100 to arrange the fourth coil group 440, and further making a structural layout of the camera module more reasonable.

Optionally, a second raised bearing portion may be provided on the top of the module housing 100 extending toward the bottom of the module housing, and the fourth coil group 440 may be arranged on the second raised bearing portion. Certainly, the fourth coil group 440 may also be fixed on the module housing 100 in another manner, which is not limited herein.

In another optional embodiment, the main body portion 220 may be provided with a carrier ring 230, the carrier ring 230 may be arranged around the lens assembly 210, and the first coil group 410 or the second coil group 420 may be arranged on the carrier ring 230. In this case, the carrier ring 230 is fixedly connected to the main body portion 220, and the lens assembly 210 may rotate relative to the carrier ring 230. In this case, the carrier ring 230 can not only be used for carrying the first coil group 410 or the second coil group 420, but also can be used for supporting the lens assembly 210, thereby making a structure of the camera module simpler.

Optionally, an inner side wall of the carrier ring 230 may be provided with an annular sliding groove, and an outer side of the lens assembly 210 may be provided with an annular protrusion, the annular protrusion is located in the annular sliding groove, and the annular protrusion can rotate relative to the annular sliding groove. Certainly, the carrier ring 230 may also be rotatably connected to the lens assembly 210 in another manner, which is not limited herein.

Optionally, the carrier ring 230 may be bonded or clamped to the main body portion 220, and certainly may also be connected in another manner, which is not limited herein. The carrier ring 230 may be made of plastic materials, and certainly may also be made of another material, which is not limited herein.

In another optional embodiment, at least one pair of first coils and at least one second coil between the at least one pair of first coils may be in limiting coordination in a direction around the optical axis. In this solution, two adjacent first coils and the second coil group 420 located between the two adjacent first coils can be mechanically limited, so that a range of rotation of the lens assembly 210 can be limited, thereby preventing excessive rotation of the lens assembly 210 from affecting the anti-shake effect.

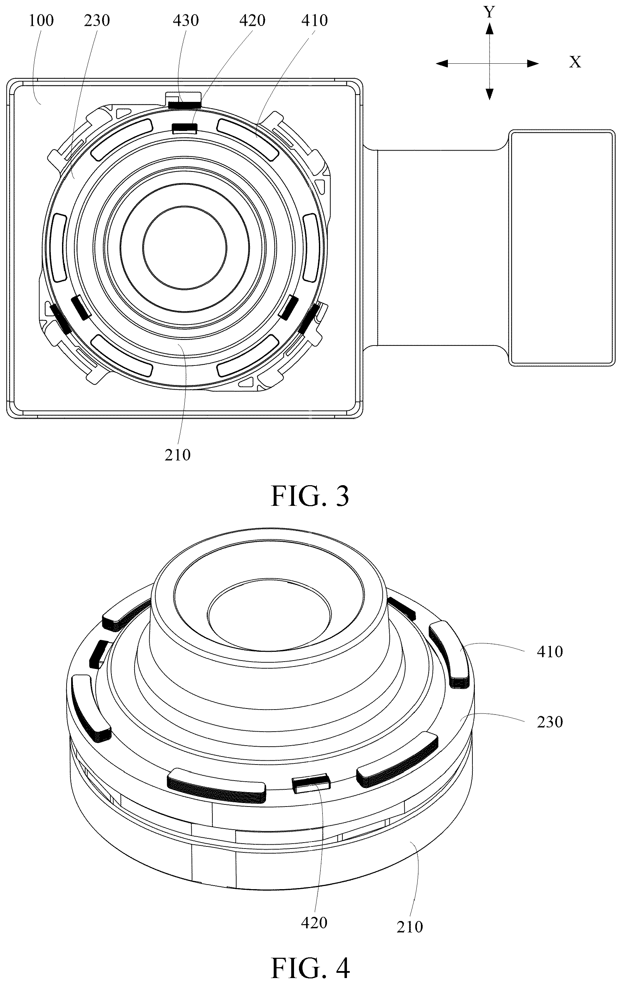

In the embodiments disclosed in this application, the rotation in the direction of the optical axis may be implemented by the first coil group 410 and the second coil group 420. The translation of the first plane can be implemented by the third coil group 430 and the second coil group 420. Rotation along at least one axis in the first plane can be implemented by the fourth coil group 440 and the first coil group 410, that is, rotation around the X-axis and/or Y-axis direction as shown in FIG. 4, the X-axis and the Y-axis are two perpendicular axes in the first plane, and the X-axis and Y-axis are also perpendicular to the optical axis. In addition, the movement of the camera 200 in the direction of the optical axis can also be implemented by the fourth coil group 440 and the first coil group 410. In this application, a six-axis movement of the camera module can be implemented.

Certainly, this application is not limited to an independent movement of each axis, and movement modes may also be combined, so as to further improve anti-shake performance of the camera module.

For example, when the camera module needs to simultaneously compensate the movement of the first plane and rotation directions of the X-axis and the Y-axis, a working coil combination is that the first coil group 410, the second coil group 420, the third coil group 430, and the fourth coil group simultaneously work. The movement in the first plane can be implemented by adjusting the magnitude and direction of the current in the third coil group 430 and the second coil group 420. In this case, the lens assembly 210, the main body portion 220, and the carrier ring 230 move along the first plane as a whole. In addition, the rotation around the X-axis and the Y-axis may also be implemented, and the rotation around the X-axis and the Y-axis can be implemented by adjusting the magnitude and direction of the current in the fourth coil group 440 and the first coil group 410. In this case, the lens assembly 210, the main body portion 220, and the carrier ring 230 rotate in the X-axis direction and the Y-axis direction as a whole.

During implementation of the compensation, the first coil group 410 and the second coil group 420 do not interfere with each other and rotate, therefore, when the first coil group 410 and the second coil group 420 rotate relative to each other, a pair of currents with a same phase is required. However, when the second coil group 420 rotates around the X-axis direction and the Y-axis direction, an electromagnetic condition for rotating in the direction of the optical axis is not satisfied. Therefore, no interference occurs during the compensation of the rotation in the X-axis direction and the Y-axis direction and the movement along the first plane.

In another case, the rotation compensation of the direction of the optical axis and the X-axis and/or Y-axis may be performed at the same time. The first coil group 410 and the second coil group 420 are energized to implement the rotation of the lens assembly 210. In this case, only the lens assembly 210 rotates. When the fourth coil group 440 and the first coil group 410 perform X-axis and/or Y-axis rotation compensation, a compensation value is satisfied by adjusting the magnitude and direction of the current of the fourth coil group 440. In this application, six-axis compensation of the camera module can be implemented. In addition, multi-axis parallel compensation may also be satisfied.

The coils in the first coil group 410, the second coil group 420, the third coil group 430, and the fourth coil group 440 in the foregoing embodiment may all be wound on an iron core. A winding direction of the first coils in the first coil group 410 and a winding direction of the second coils in the second coil group 420 may be flexibly selected according to an actual requirement.

In another optional embodiment, the winding direction of the first coil group 410 and the winding direction of the second coil group 420 may be reversed, which may also satisfy a rotation requirement of this application.

For another example, when central axes of the windings of the first coil and the second coil are placed in parallel and on a same circular line, magnetic fields of different sizes may be generated by controlling the magnitude of an incoming current to generate the force on the lens assembly 210, which makes the lens assembly to generate a small-angle rotation in the direction of the optical axis, and then the rotation in the direction of the optical axis can also be implemented.

In another optional embodiment, the first coil group 410 and the second coil group 420 may be made into AC excitation groups by changing directions and quantities of the central axes of the windings in the first coil group 410 and the second coil group 420, and the rotation along the optical axis may also be implemented.

Based on the camera module disclosed in the embodiments of this application, an embodiment of this application further discloses an electronic device. The disclosed electronic device includes the camera module described in any of the foregoing embodiments.

The electronic device disclosed in the embodiments of this application may be a device such as a smart phone, a tablet computer, an e-book reader, a wearable device (such as a smart watch), and a video game console. A specific type of the electronic device is not limited in the embodiments of this application.

## Claims

1. A camera module, comprising:
a module housing (100), wherein the module housing is provided with a first inner cavity;
a camera (200), wherein the camera (200) comprises a lens assembly (210) and a main body portion (220), the main body portion (220) is located in the first inner cavity, the main body portion (220) is provided with a second inner cavity, at least part of the lens assembly (210) is located in the second inner cavity and the lens assembly (210) is capable of rotating around an optical axis of the lens assembly, and the bottom of the module housing (100) and the bottom of the main body portion (220) are elastically connected by an elastic member (300); and
a driving mechanism, wherein the driving mechanism comprises a first coil group (410), a second coil group (420), a third coil group (430), and a fourth coil group (440); one of the first coil group (410) and the second coil group (420) is arranged on the lens assembly (210), and the other is arranged on the main body portion (220); and the third coil group (430) and the fourth coil group (440) are spaced apart on the module housing (100), wherein
the first coil group (410) comprises at least one pair of first coils, the at least one pair of first coils are spaced apart in a circumferential direction of the lens assembly, the second coil group (420) comprises at least one second coil, the at least one second coil is located between the one pair of first coils, the third coil group (430) is arranged opposite to the second coil group (420), and the fourth coil group (440) is arranged opposite to the first coil group (410);
in a case that the first coil group (410) and the second coil group (420) are energized, the lens assembly (210) is driven to rotate around the optical axis;
in a case that the third coil group (430) and the second coil group (420) are energized, the main body portion (220) is driven to move along a first plane, wherein the first plane is perpendicular to the optical axis; and
in a case that the first coil group (410) and the fourth coil group (440) are energized, the main body portion (220) is driven to rotate around at least one axis in the first plane.

2. The camera module according to claim 1, wherein the first coil group (410) comprises a plurality of first coils, a quantity of the first coils is an even number, spacing angles between two adjacent first coils are the same, the second coil group (420) comprises a plurality of second coils, and at least one second coil is correspondingly arranged between each pair of first coils.

3. The camera module according to claim 2, wherein the first coil group (410) comprises three pairs of first coils, a quantity of the second coils is three, an angle between two adjacent second coils is 120°, and the three second coils are arranged in a one-to-one correspondence with the three pairs of first coils.

4. The camera module according to claim 3, wherein the third coil group (430) comprises three third coils, each third coil is arranged opposite to one second coil, and an angle between any two adjacent third coils is 120°.

5. The camera module according to claim 3, wherein the fourth coil group (440) comprises three fourth coils, the three fourth coils are arranged opposite to one first coil in each pair of first coils, and an angle between any two adjacent fourth coils is 120°.

6. The camera module according to claim 5, wherein in a case that all the fourth coils in the fourth coil group (440) and the first coils corresponding to all the fourth coils are energized, the main body portion (220) is driven to move in a direction of the optical axis.

7. The camera module according to claim 1, wherein the module housing (100) comprises a cover body (110) and a bottom plate (120), the cover body (110) and the bottom plate (120) enclose the first inner cavity, the cover body (110) is provided with an avoidance hole (111), the avoidance hole is in communication with the first inner cavity, and the lens assembly (210) is arranged opposite to the avoidance hole (111).

8. The camera module according to claim 7, wherein the elastic member (300) comprises an elastic pad (310) and a plurality of springs (320), and the elastic pad (310) is arranged on a surface of a side of the bottom plate (120) facing the main body portion (220), the plurality of springs (320) are spaced apart in a circumferential direction of the main body portion (220), the elastic pad (310) is provided with positioning holes (311), and one of the springs (320) is located in the positioning hole (311).

9. The camera module according to claim 8, wherein a positioning protrusion (121) is provided on the side of the bottom plate (120) facing the main body portion (220), both the positioning protrusion (121) and the spring (320) are located in the positioning hole (311), and an end of the positioning protrusion (121) away from the bottom plate (120) is connected to the spring (320).

10. The camera module according to claim 1, wherein the second coil group (420) and the third coil group (430) are located in a second plane, the third coil group (430) is arranged around outside the second coil group (420), and the second plane is parallel to the first plane.

11. The camera module according to claim 1, wherein the first coil group (410) and the fourth coil group (440) are distributed in a direction of the optical axis, and the fourth coil group (440) is located between the first coil group (410) and the top of the module housing (100).

12. The camera module according to claim 1, wherein the main body portion (220) is provided with a carrier ring (230), the carrier ring (230) is arranged around the lens assembly (210), and the first coil group (410) or the second coil group (420) is arranged on the carrier ring (230).

13. The camera module according to claim 1, wherein two adjacent first coils and at least one second coil between the two adjacent first coils are in limiting coordination in a direction around the optical axis.

14. An electronic device, comprising the camera module according to any one of claims 1 to 13.

## Patentansprüche

1. Kameramodul, umfassend:
ein Modulgehäuse (100), wobei das Modulgehäuse mit einem ersten inneren Hohlraum versehen ist;
eine Kamera (200), wobei die Kamera (200) eine Linsenanordnung (210) und einen Hauptkörperabschnitt (220) umfasst, sich der Hauptkörperabschnitt (220) in dem ersten inneren Hohlraum befindet, der Hauptkörperabschnitt (220) mit einem zweiten inneren Hohlraum versehen ist, sich zumindest ein Teil der Linsenanordnung (210) in dem zweiten inneren Hohlraum befindet,
und die Linsenanordnung (210) in der Lage ist, um eine optische Achse der Linsenanordnung zu drehen, und der Boden des Modulgehäuses (100) und der Boden des Hauptkörperabschnitts (220) durch ein elastisches Element (300) elastisch verbunden sind; und
einen Antriebsmechanismus, wobei der Antriebsmechanismus eine erste Spulengruppe (410), eine zweite Spulengruppe (420), eine dritte Spulengruppe (430) und eine vierte Spulengruppe (440) umfasst; eine von der ersten Spulengruppe (410) und der zweiten Spulengruppe (420) an der Linsenanordnung (210) angeordnet ist und die andere an dem Hauptkörperabschnitt (220) angeordnet ist; und die dritte Spulengruppe (430) und die vierte Spulengruppe (440) an dem Modulgehäuse (100) beabstandet sind, wobei
die erste Spulengruppe (410) mindestens ein Paar erster Spulen umfasst, das mindestens eine Paar erster Spulen in einer Umfangsrichtung der Linsenanordnung beabstandet ist, die zweite Spulengruppe (420) mindestens eine zweite Spule umfasst, die mindestens eine zweite Spule zwischen dem einen Paar erster Spulen angeordnet ist, die dritte Spulengruppe (430) gegenüber der zweiten Spulengruppe (420) angeordnet ist, und die vierte Spulengruppe (440) gegenüber der ersten Spulengruppe (410) angeordnet ist;
in einem Fall, in dem die erste Spulengruppe (410) und die zweite Spulengruppe (420) erregt sind, die Linsenanordnung (210) angetrieben wird, um um die optische Achse zu drehen;
in einem Fall, in dem die dritte Spulengruppe (430) und die zweite Spulengruppe (420) erregt sind, der Hauptkörperabschnitt (220) angetrieben wird, um sich entlang einer ersten Ebene zu bewegen, wobei die erste Ebene senkrecht zu der optischen Achse ist; und
in einem Fall, in dem die erste Spulengruppe (410) und die vierte Spulengruppe (440) erregt sind, der Hauptkörperabschnitt (220) angetrieben wird, um um mindestens eine Achse in der ersten Ebene zu drehen.

2. Kameramodul nach Anspruch 1, wobei die erste Spulengruppe (410) eine Vielzahl von ersten Spulen umfasst, eine Anzahl der ersten Spulen eine gerade Zahl ist, Abstandswinkel zwischen zwei angrenzenden ersten Spulen gleich sind, die zweite Spulengruppe (420) eine Vielzahl von zweiten Spulen umfasst und mindestens eine zweite Spule entsprechend zwischen jedem Paar erster Spulen angeordnet ist.

3. Kameramodul nach Anspruch 2, wobei die erste Spulengruppe (410) drei Paare erster Spulen umfasst, eine Anzahl der zweiten Spulen drei ist, ein Winkel zwischen zwei angrenzenden zweiten Spulen 120° ist und die drei zweiten Spulen in einer Eins-zu-Eins-Entsprechung mit den drei Paaren erster Spulen angeordnet sind.

4. Kameramodul nach Anspruch 3, wobei die dritte Spulengruppe (430) drei dritte Spulen umfasst, jede dritte Spule gegenüber einer zweiten Spule angeordnet ist und ein Winkel zwischen zwei beliebigen angrenzenden dritten Spulen 120° ist.

5. Kameramodul nach Anspruch 3, wobei die vierte Spulengruppe (440) drei vierte Spulen umfasst, die drei vierten Spulen gegenüber einer ersten Spule in jedem Paar erster Spulen angeordnet sind und ein Winkel zwischen zwei beliebigen angrenzenden vierten Spulen 120° ist.

6. Kameramodul nach Anspruch 5, wobei in einem Fall, in dem alle vierten Spulen in der vierten Spulengruppe (440) und die ersten Spulen, die allen vierten Spulen entsprechen, erregt sind, der Hauptkörperabschnitt (220) angetrieben wird, um sich in einer Richtung der optischen Achse zu bewegen.

7. Kameramodul nach Anspruch 1, wobei das Modulgehäuse (100) einen Abdeckkörper (110) und eine Bodenplatte (120) umfasst, der Abdeckkörper (110) und die Bodenplatte (120) den ersten inneren Hohlraum umschließen, der Abdeckkörper (110) mit einem Ausweichloch (111) versehen ist, das Ausweichloch mit dem ersten inneren Hohlraum in Verbindung ist und die Linsenanordnung (210) gegenüber dem Ausweichloch (111) angeordnet ist.

8. Kameramodul nach Anspruch 7, wobei das elastische Element (300) ein elastisches Kissen (310) und eine Vielzahl von Federn (320) umfasst und das elastische Kissen (310) auf einer Oberfläche einer Seite der Bodenplatte (120) angeordnet ist, die dem Hauptkörperabschnitt (220) zugewandt ist, die Vielzahl von Federn (320) in Umfangsrichtung des Hauptkörperabschnitts (220) voneinander beabstandet sind, das elastische Kissen (310) mit Stelllöchern (311) versehen ist und sich eine der Federn (320) in dem Stellloch (311) befindet.

9. Kameramodul nach Anspruch 8, wobei ein Stellvorsprung (121) an der Seite der Bodenplatte (120) bereitgestellt ist, die dem Hauptkörperabschnitt (220) zugewandt ist, sowohl der Stellvorsprung (121) als auch die Feder (320) in dem Stellloch (311) angeordnet sind und ein von der Bodenplatte (120) entferntes Ende des Stellvorsprungs (121) mit der Feder (320) verbunden ist.

10. Kameramodul nach Anspruch 1, wobei die zweite Spulengruppe (420) und die dritte Spulengruppe (430) in einer zweiten Ebene angeordnet sind, die dritte Spulengruppe (430) um die zweite Spulengruppe (420) angeordnet ist und die zweite Ebene parallel zur ersten Ebene ist.

11. Kameramodul nach Anspruch 1, wobei die erste Spulengruppe (410) und die vierte Spulengruppe (440) in einer Richtung der optischen Achse verteilt sind und die vierte Spulengruppe (440) zwischen der ersten Spulengruppe (410) und der Oberseite des Modulgehäuses (100) angeordnet ist.

12. Kameramodul nach Anspruch 1, wobei der Hauptkörperabschnitt (220) mit einem Trägerring (230) versehen ist, der Trägerring (230) um die Linsenanordnung (210) angeordnet ist und die erste Spulengruppe (410) oder die zweite Spulengruppe (420) an dem Trägerring (230) angeordnet ist.

13. Kameramodul nach Anspruch 1, wobei zwei angrenzende erste Spulen und mindestens eine zweite Spule zwischen den zwei angrenzenden ersten Spulen in begrenzender Koordination in einer Richtung um die optische Achse sind.

14. Elektronische Vorrichtung, umfassend das Kameramodul nach einem der Ansprüche 1 bis 13.

## Revendications

1. Module de caméra, comprenant :
un boîtier de module (100), dans lequel le boîtier de module est pourvu d'une première cavité interne ;
une caméra (200), dans lequel la caméra (200) comprend un ensemble d'objectifs (210) et une partie de corps principal (220), la partie de corps principal (220) se trouve dans la première cavité interne, la partie de corps principal (220) est pourvue d'une seconde cavité interne, au moins une partie de l'ensemble d'objectifs (210) est située dans la seconde cavité interne
et l'ensemble d'objectifs (210) est capable de tourner autour d'un axe optique de l'ensemble d'objectifs, et la partie inférieure du boîtier de module (100) et la partie inférieure de la partie de corps principal (220) sont reliées élastiquement par un élément élastique (300) ; et
un mécanisme d'entraînement, dans lequel le mécanisme d'entraînement comprend un premier groupe de bobines (410), un deuxième groupe de bobines (420), un troisième groupe de bobines (430) et un quatrième groupe de bobines (440) ; l'un du premier groupe de bobines (410) et du deuxième groupe de bobines (420) est agencé sur l'ensemble d'objectifs (210), et l'autre est agencé sur la partie de corps principal (220) ; et le troisième groupe de bobines (430) et le quatrième groupe de bobines (440) sont espacés l'un de l'autre sur le boîtier de module (100), dans lequel
le premier groupe de bobines (410) comprend au moins une paire de premières bobines ; l'au moins une paire de premières bobines sont espacées l'une de l'autre dans une direction circonférentielle de l'ensemble d'objectifs, le deuxième groupe de bobines (420) comprend au moins une deuxième bobine, l'au moins une deuxième bobine est située entre l'une paire de premières bobines, le troisième groupe de bobines (430) est agencé à l'opposé du deuxième groupe de bobines (420), et le quatrième groupe de bobines (440) est agencé à l'opposé du premier groupe de bobines (410) ;
dans un cas où le premier groupe de bobines (410) et le deuxième groupe de bobines (420) sont alimentés, l'ensemble d'objectifs (210) est entraîné en rotation autour de l'axe optique ;
dans un cas où le troisième groupe de bobines (430) et le deuxième groupe de bobines (420) sont alimentés, la partie de corps principal (220) est amenée à se déplacer le long d'un premier plan, dans lequel le premier plan est perpendiculaire à l'axe optique ; et
dans un cas où le premier groupe de bobines (410) et le quatrième groupe de bobines (440) sont alimentés, la partie de corps principal (220) est entraînée en rotation autour d'au moins un axe dans le premier plan.

2. Module de caméra selon la revendication 1, dans lequel le premier groupe de bobines (410) comprend une pluralité de premières bobines, un nombre des premières bobines est un nombre pair, les angles d'espacement entre deux premières bobines adjacentes sont identiques, le deuxième groupe de bobines (420) comprend une pluralité de bobines, et au moins une deuxième bobine est agencée de manière correspondante entre chaque paire de premières bobines.

3. Module de caméra selon la revendication 2, dans lequel le premier groupe de bobines (410) comprend trois paires de premières bobines, un nombre des deuxièmes bobines est de trois, un angle entre deux deuxièmes bobines adjacentes est de 120°, et les trois deuxièmes bobines sont agencées en correspondance biunivoque avec les trois paires de premières bobines.

4. Module de caméra selon la revendication 3, dans lequel le troisième groupe de bobines (430) comprend trois troisièmes bobines, chaque troisième bobine est agencée à l'opposé d'une deuxième bobine, et un angle entre deux quelconques troisièmes bobines adjacentes est de 120°.

5. Module de caméra selon la revendication 3, dans lequel le quatrième groupe de bobines (440) comprend trois quatrièmes bobines, les trois quatrièmes bobines sont agencées à l'opposé d'une première bobine dans chaque paire de premières bobines, et un angle entre deux quelconques quatrièmes bobines adjacentes est de 120°.

6. Module de caméra selon la revendication 5, dans lequel, dans un cas où toutes les quatrièmes bobines du quatrième groupe de bobines (440) et les premières bobines correspondant à toutes les quatrièmes bobines sont alimentées, la partie de corps principal (220) est amenée à se déplacer dans une direction de l'axe optique.

7. Module de caméra selon la revendication 1, dans lequel le boîtier de module (100) comprend un corps de couvercle (110) et une plaque inférieure (120), le corps de couvercle (110) et la plaque inférieure (120) entourent la première cavité interne, le corps de couvercle (110) est pourvu d'un trou d'évitement (111), le trou d'évitement est en communication avec la première cavité interne, et l'ensemble d'objectifs (210) est agencé à l'opposé du trou d'évitement (111).

8. Module de caméra selon la revendication 7, dans lequel l'élément élastique (300) comprend un coussin élastique (310) et une pluralité de ressorts (320), et le coussin élastique (310) est agencé sur une surface d'un côté de la plaque inférieure (120) faisant face à la partie de corps principal (220), la pluralité de ressorts (320) sont espacés dans une direction circonférentielle de la partie de corps principal (220), le coussin élastique (310) est pourvu de trous de positionnement (311), et l'un des ressorts (320) est situé dans le trou de positionnement (311).

9. Module de caméra selon la revendication 8, dans lequel une saillie de positionnement (121) est fournie sur le côté de la plaque inférieure (120) faisant face à la partie de corps principal (220), la saillie de positionnement (121) et le ressort (320) sont tous deux situés dans le trou de positionnement (311), et une extrémité de la saillie de positionnement (121) éloignée de la plaque inférieure (120) est reliée au ressort (320).

10. Module de caméra selon la revendication 1, dans lequel le deuxième groupe de bobines (420) et le troisième groupe de bobines (430) sont situés dans un second plan, le troisième groupe de bobines (430) est agencé à l'extérieur du deuxième groupe de bobines (420), et le second plan est parallèle au premier plan.

11. Module de caméra selon la revendication 1, dans lequel le premier groupe de bobines (410) et le quatrième groupe de bobines (440) sont répartis dans une direction de l'axe optique, et le quatrième groupe de bobines (440) est situé entre le premier groupe de bobines (410) et la partie supérieure du boîtier de module (100).

12. Module de caméra selon la revendication 1, dans lequel la partie de corps principal (220) est pourvue d'une bague de support (230), la bague de support (230) est agencée autour de l'ensemble d'objectifs (210), et le premier groupe de bobines (410) ou le deuxième groupe de bobines (420) est agencé sur la bague de support (230).

13. Module de caméra selon la revendication 1, dans lequel deux premières bobines adjacentes et au moins une deuxième bobine entre les deux premières bobines adjacentes sont en coordination restrictive dans une direction autour de l'axe optique.

14. Dispositif électronique comprenant le module de caméra selon l'une quelconque des revendications 1 à 13.
